# EUROPEAN PATENT SPECIFICATION

(11) **EP 4 049 896 B1**
(45) Date of publication and mention of the grant of the patent: **27.03.2024**
(21) Application number: 22157093.0
(22) Date of filing: 16.02.2022
(51) Int. Cl.: B60Q 1/04, B60Q 1/26, B60Q 1/28, B60Q 1/00, F21W 103/55

(54) **VEHICLE LIGHT ASSEMBLY, INSTALLATION METHOD THEREOF AND VEHICLE**
FAHRZEUGLICHTANORDNUNG, MONTAGEVERFAHREN UND FAHRZEUG
DISPOSITIF LUMINEUX DE VÉHICULE, PROCÉDÉ DE MONTAGE ET VÉHICULE

(30) Priority: 24.02.2021 CN 202110206806
(43) Date of publication of application: 31.08.2022
(73) Proprietor: Stellantis Auto SAS, 78300 Poissy (FR)
(72) Inventor: WANG, JUNYONG, SHANGHAI, 201900 (CN); DING, TING TING, SHANGHAI, 201100 (CN); ZHU, WEN HUI, SHANGHAI, 201800 (CN); HUANG, YU, SHANGHAI, 201100 (CN); ZHU, YIPENG, SHANGHAI, 200120 (CN); FU, JIAHAO, SHANGHAI, 201600 (CN); LI, YAN, SHANGHAI, 201600 (CN)

(56) References cited:
- EP-B1- 3 331 726
- CN-B- 109 466 422

## Description

### FIELD OF TECHNOLOGY

The present invention relates to vehicle parts, particularly to a vehicle light assembly, an installation method thereof and a vehicle, and more particularly to a vehicle light assembly capable of being easily assembled while ensuring assembly reliability within a limited space, an installation method thereof and a vehicle.

### BACKGROUND

As vehicle technology continuously develops, vehicles have become an indispensable means of transportation in life, and vehicle manufacturers, vehicle part manufacturers and users no longer purely focus on the performance of the vehicle itself, but also pay increasing attention to the functional requirements of vehicle parts. Among vehicle parts, the lighting of the vehicle is an important part of the vehicle. The lighting and signal lights of the vehicle are not only crucial parts related to the driving safety of the vehicle, but also important elements of the appearance of the vehicle.

Lights for diverse usage can be included in the vehicle's light assembly, such as daytime running lights (abbreviated as DRL), turn signals, high beams, low beams. Various vehicle lights take up much space, which makes it impossible for a light such as a DRL to be stably fixed due to insufficient space.

The existing DRL is installed on the vehicle only through two assembly parts at both ends, resulting in poor assembly of the DRL, and if adding another assembly part to the DRL in order to increase its assembly reliability, there is not enough space for fixing the newly added assembly part of the DRL, or it is difficult to fix the newly added assembly part due to insufficient space, resulting in a waste of cost and time. EP 3 331 726 B1 describes a vehicle light assembly according to the preamble of claim 1.

### SUMMARY

### (I) Technical problems to be solved

A first objective of the present invention is to provide a vehicle light assembly capable of being easily assembled and cost-saved, so as to solve the problems of insufficient assembly space and unsatisfactory assembly reliability of the existing vehicle light assembly.

A second objective of the present invention is to provide an installation method of a vehicle light assembly capable of being easily assembled and cost-saved, so as to solve the problems of insufficient assembly space and unsatisfactory assembly reliability of the existing vehicle light assembly.

A third objective of the present invention is to provide a vehicle including a vehicle light assembly capable of being easily assembled and cost-saved, so as to solve the problems of insufficient assembly space and unsatisfied assembly reliability of the existing vehicle light assembly.

### (II) Technical solutions

In order to solve the above-mentioned problems, the present invention provides a vehicle light assembly, including: a DRL, a first portion of a first end thereof is connectable to a fender mounting plate through a first connecting part and a second portion of the first end is connected to a fender mounting bracket through a third connecting part, a second end thereof is connected to a front bumper frame through a second connecting part, wherein the first, second and third connecting part are connecting parts of the DLR; and a headlight, located below the DRL along a Z direction when mounted on the vehicle, along a Z direction, wherein a X direction refers to the length direction of the vehicle, a Y direction refers to the width direction of the vehicle and the Z direction refers to the vertical direction of the vehicle, a first end thereof is connectable to the fender mounting bracket through a fourth connecting part and a sixth connecting part, and a second end thereof is connectable to the front bumper frame through a fifth connecting part; , wherein the fourth, fifth and sixth connecting part are connecting parts of the headlight and wherein the third connecting part and the fourth connecting part are connectable to the fender mounting bracket at a same position by a same fastener.

Alternatively, the fender mounting plate and the fender mounting bracket are located on an inner side of a fender in a Y direction and the fender mounting bracket is located below the fender in the Z direction.

Alternatively, the fender mounting bracket includes a first plate, a second plate extending from an inner edge of the first plate along the Y direction to a rear side in the X direction, a third plate formed by extending from a lower edge of the second plate to an outer side along the Y direction, and a fourth plate extending downward from a front end of the third plate; the third connecting part and the fourth connecting part are connected to the first plate and the sixth connection part is connected to the fourth plate.

Alternatively, the front bumper frame includes a first surface extending horizontally and a second surface extending perpendicular to the first surface, the second connecting part is connected to the first surface, and the fifth connecting part is connected to the second surface.

Alternatively, the fourth connecting part is located on an upper side of the first end of the headlight, and the sixth connecting part is located on a lower side of the first end of the headlight.

Alternatively, the first portion and the second portion of the first end of the DRL are located on the upper and lower sides of the first end of the DRL in the Z direction, respectively.

Alternatively, the fourth connecting part is formed with a pre-holding structure therebelow, and the first plate is formed with a connecting hole corresponding to the pre-holding structure thereon.

Alternatively, the fourth connecting part, the fifth connecting part, the sixth connecting part and the pre-holding structure are connected in the X direction.

In another aspect, the present invention further provides an installation method of vehicle light assembly, including: connecting the fifth connecting part of the second end of the headlight to the front bumper frame, and inserting the pre-holding structure into a connecting hole on a first plate of the fender mounting bracket; connecting the first connecting part of the first portion of the first end of the DRL to the fender mounting plate, and connecting the second connecting part of the second end of the DRL to the front bumper frame; connecting both of the fourth connecting part of the first end of the headlight and the third connecting part of the second portion of the first end of the DRL to the first plate of the fender mounting bracket by a fastener.

In yet another aspect, the present invention further provides a vehicle including the vehicle light assembly according to the embodiments of the present invention.

### (III) Beneficial effects

The present invention provides a vehicle light assembly, including: a DRL, a first portion of a first end thereof is connected to a fender mounting plate through a first connecting part and a second portion of the first end thereof is connected to a fender mounting bracket through a third connecting part, a second end thereof is connected to a front bumper frame through a second connecting part; and a headlight, is located below the DRL along a Z direction, a first end thereof is connected to the fender mounting bracket through a fourth connecting part and a sixth connecting part, and a second end thereof is connected to the front bumper frame through a fifth connecting part; wherein, the third connecting part and the fourth connecting part are connected to the fender mounting bracket at a same position by a same fastener. The vehicle light assembly according to the embodiments of the present invention can not only improve the assembly reliability of the DRL within a limited space, but also provide excellent assembly convenience and save the manufacturing cost.

### BRIEF DESCRIPTION OF THE DRAWINGS

The above-mentioned and other objectives, features and other advantages of the present invention will be more clearly understood from the following detailed description, taken in conjunction with the accompanying drawings, wherein:
FIG. 1 is a schematic diagram showing the connection of a vehicle light assembly according to an embodiment of the present invention;
FIG. 2 is a schematic diagram showing the connection of a vehicle light assembly from another perspective according to an embodiment of the present invention; and
FIG. 3 is a schematic diagram showing the partial connection of a vehicle light assembly according to an embodiment of the present invention.

### Reference Numerals:

10: DRL; 11: first connecting part; 12: second connecting part; 13: third connecting part; 20: headlight; 24: fourth connecting part; 25: fifth connecting part; 26: sixth connecting part; 27: pre-holding structure; 30: fender mounting plate; 40: fender mounting bracket; 41: first plate; 42: second plate; 43: third plate; 44: fourth plate; 50: front bumper frame; 51: first surface; 52: second surface.

### DETAILED DESCRIPTION

In order to make the objectives, technical solutions and advantages of the embodiments of the present invention clearer, the technical solutions in the embodiments of the present invention will be clearly and completely described below in conjunction with the accompanying drawings in the embodiments of the present invention. Obviously, the described embodiments are some embodiments of the present invention, but not all embodiments. Based on the embodiments of the present invention, all other embodiments obtained by those of ordinary skill in the art without creative work fall within the protection scope of the present invention.

In the description of the present invention, taking the vehicle as a reference, the X direction refers to the length direction of the vehicle, the Y direction refers to the width direction of the vehicle, and the Z direction refers to the vertical direction of the vehicle.

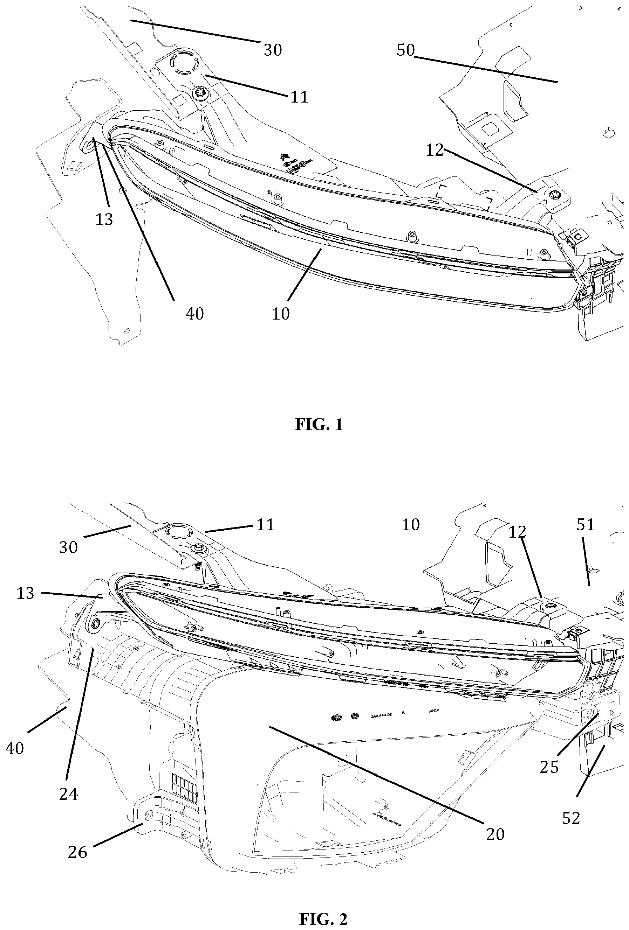

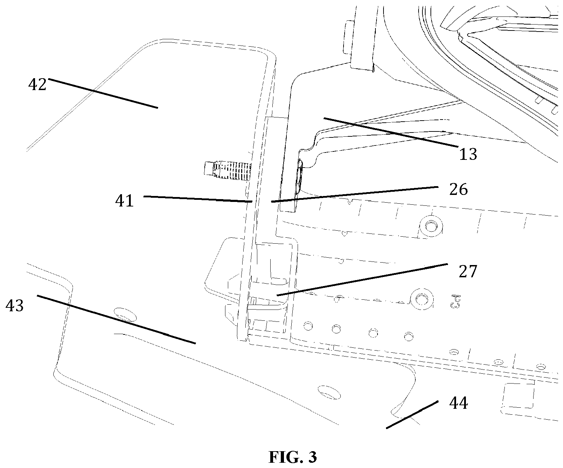

FIG. 1 is a schematic diagram showing the connection of a vehicle light assembly according to an embodiment of the present invention; FIG. 2 is a schematic diagram showing the connection of a vehicle light assembly from another perspective according to an embodiment of the present invention; and FIG. 3 is a schematic diagram showing the partial connection of a vehicle light assembly according to an embodiment of the present invention.

In one aspect, a vehicle light assembly including a DRL 10 and a headlight 20 is provided according to an embodiment of the present invention.

Specifically, the DRL 10 is formed with a first end and a second end along the Y direction, wherein the first end further includes a first portion and a second portion along the Z direction, that is, the first portion and the second portion of the first end of the DRL 10 may be located at the inner and outer sides of the first end of the DRL 10 in the Y direction, respectively, the first portion of the first end is connected to the fender mounting plate 30 of the vehicle through the first connecting part 11 , and the second portion of the first end is connected to the fender mounting bracket 40 of the vehicle through the third connecting part 13, additionally, the second end is connected to the front bumper frame 50 through the second connecting part 12.

Further, the headlight 20 is located below the DRL 10 along the Z direction, which also includes a first end and a second end formed along the Y direction, the first end of the headlight 20 is connected to the fender mounting bracket 40 through the fourth connecting part 24 and the sixth connecting part 26, and the second end is connected to the front bumper frame 50 through the fifth connecting part 25, wherein the fourth connecting part 24 is located above the sixth connecting part 26 along the Z direction, that is, the fourth connecting part 24 may be located at the upper side of the first end of the headlight 20, the sixth connecting part 26 may be located at the lower side of the first end of the headlight 20, additionally, the fifth connecting part 25 and the second connecting part 12 are connected to the front bumper frame 50 at different positions.

In this way, the third connecting part 13 of the DRL 10 and the fourth connecting part 24 of the headlight 20 are connected to the fender mounting bracket 40 at a same position by a same fastener, so as to ensure the assembly reliability of the DRL 10 while saving space.

Further, the fender mounting plate 30 and the fender mounting bracket 40 are located on the inner side of the fender in the Y direction and the fender mounting bracket 40 is located below the fender in the Z direction.

Specifically, the fender mounting bracket 40 is formed by connecting four plate-shaped parts, which include a first plate 41, a second plate 42 extending from an inner edge of the first plate 41 in the Y direction to a rear side in the X direction, a third plate 43 formed by extending from a lower edge of the second plate 42 to an outer side along the Y direction, and a fourth plate 44 extending downward from a front end of the third plate 43, wherein the third connecting part 13 and the fourth connecting part 24 may be jointly connected to the first plate 41, and the sixth connection part 26 may be connected to the fourth plate 44.

Further, the front bumper frame 50 connected with the second connecting part 12 and the fifth connecting part 25 may include a first surface 51 extending horizontally and a second surface 52 extending downward as well as perpendicular to the first surface 51, wherein the second connecting part 12 may be connected to the first surface 51, and the fifth connecting part 25 may be connected to the second surface 52.

As described above, in the vehicle light assembly according to the embodiments of the present invention, the third connecting part 13 of the DRL 10 and the fourth connecting part 24 of the headlight 20 are assembled in the same position, so that the assembly space can be saved while the assembly reliability is ensured. Furthermore, in order to facilitate the assembly of the third connecting part 13 and the fourth connecting part 24, the fourth connecting part 24 may be formed with a pre-holding structure 27 therebelow, and the first plate 41 may be formed with a connecting hole corresponding to the pre-holding structure 27 thereon, thus, during the assembly process, the position of the fourth connecting part 24 of the headlight 20 is roughly fixed by the pre-holding structure 27, and then the third connecting part 13 of the DRL 10 is assembled. Preferably, in order to further improve the assembly convenience of the headlight 20, the three connection parts of the headlight 20, namely, the fourth connection part 24, the fifth connection part 25 and the sixth connection part 26 are all connected along the X direction.

Through the above-mentioned vehicle light assembly according to the embodiments of the present invention, the assembly space and manufacturing cost can be saved while the assembly reliability of the vehicle light assembly is ensured.

In another aspect, an embodiment of the present invention further provides an installation method of vehicle light assembly, the method includes: connecting the fifth connecting part 25 of the second end of the headlight 20 to the front bumper frame 50, and inserting the pre-holding structure 27 into the connecting hole on the first plate 41 of the fender mounting bracket 40; connecting the first connecting part 11 of the first portion of the first end of the DRL 10 to the fender mounting plate 30, and connecting the second connecting part 12 of the second end of the DRL 10 to the front bumper frame 50; connecting both of the fourth connecting part 24 of the first end of the headlight 20 and the third connecting part 13 of the second portion of the first end of the DRL 10 to the first plate 41 of the fender mounting bracket 40 by a fastener.

In yet another aspect, the present invention further provides a vehicle including the vehicle light assembly according to the embodiments of the present invention.

As described above, the present invention provides a vehicle light assembly, an installation method of a vehicle light assembly and a vehicle, the vehicle light assembly includes: a DRL, a first portion of a first end thereof is connected to a fender mounting plate through a first connecting part and a second portion of the first end thereof is connected to a fender mounting bracket through a third connecting part, a second end thereof is connected to a front bumper frame through a second connecting part; and a headlight, located below the DRL along a Z direction, a first end thereof is connected to the fender mounting bracket through a fourth connecting part and a sixth connecting part, and a second end thereof is connected to the front bumper frame through a fifth connecting part; wherein, the third connecting part and the fourth connecting part are connected to the fender mounting bracket at a same position by a same fastener. The vehicle light assembly according to the embodiment of the present invention can not only improve the assembly reliability of the DRL within a limited space, but also facilitate the assembly and save the manufacturing cost.

## Claims

1. A vehicle light assembly, comprising a DRL (10) and a headlight (20), wherein a first portion of a first end of the DRL (10) is connectable to a fender mounting plate through a first connecting part (11) and a second end of the DRL (10) is connectable to a front bumper frame (50) through a second connecting part (12); and the headlight (20) is located below the DRL (10) in a Z direction when mounted on the vehicle, wherein a X direction refers to the length direction of the vehicle, a Y direction refers to the width direction of the vehicle and the Z direction refers to the vertical direction of the vehicle and **characterized in that** a second portion of the first end of the DRL (10) is connectable to a fender mounting bracket (40) through a third connecting part (13), the first, second and third connecting parts (11, 12, 13) being connecting parts of the DRL (10), and a first end of the headlight (20) is connectable to the fender mounting bracket (40) through a fourth connecting part (24) and a sixth connecting part (26), and a second end of the headlight (20) is connectable to the front bumper frame (50) through a fifth connecting part (25), wherein the fourth, fifth and sixth connecting part (24, 25, 26) are connecting parts of the headlight (20),wherein, the third connecting part (13) and the fourth connecting part (24) are connected to the fender mounting bracket (40) at a same position by a same fastener.

2. The light assembly of claim 1, **characterized in that**, the first, third, fourth and sixth connecting parts are arranged such that the DRL and the headlight are connectable to the fender mounting plate (30) and to the fender mounting bracket (40) that are located on an inner side of a fender in a Y direction and the fender mounting bracket (40) is located below the fender in the Z direction.

3. The light assembly of claim 2, **characterized in that**,
the fender mounting bracket (40) comprises a first plate (41), a second plate (42) extending from an inner edge of the first plate (41) along the Y direction to a rear side in the X direction, a third plate (43) formed by extending from a lower edge of the second plate (42) to an outer side along the Y direction, and a fourth plate (44) extending downward from a front end of the third plate (43); the third connecting part (13) and the fourth connecting part (24) are connectable to the first plate (41) and the sixth connection part is connectable to the fourth plate (44).

4. The light assembly of claim 3, **characterized in that**,
the front bumper frame (50) comprises a first surface (51) extending horizontally and a second surface (52) extending perpendicular to the first surface (51), the second connecting part (12) is connectable to the first surface (51), and the fifth connecting part (25) is connectable to the second surface (52).

5. The light assembly of claim 4, **characterized in that**,
the fourth connecting part (24) is located on an upper side of the first end of the headlight (20), and the sixth connecting part (26) is located on a lower side of the first end of the headlight (20).

6. The light assembly of claim 5, **characterized in that**,
the first portion and the second portion of the first end of the DRL (10) are located on upper and lower sides of the first end of the DRL (10) in the Z direction, respectively.

7. The light assembly of claim 6, **characterized in that**,
the fourth connecting part (24) is formed with a pre-holding structure (27) therebelow, and a connecting hole corresponding to the pre-holding structure (27) is formed on the first plate (41).

8. The light assembly of claim 7, **characterized in that**,
the fourth connecting part (24), the fifth connecting part (25), the sixth connecting part (26) and the pre-holding structure (27) are connected in the X direction.

9. An installation method of vehicle light assembly of any one of claims 1-8, comprising:
connecting the fifth connecting part (25) of the second end of the headlight (20) to the front bumper frame (50), and inserting the pre-holding structure (27) into a connecting hole on a first plate (41) of the fender mounting bracket (40);
connecting the first connecting part (11) of the first portion of the first end of the DRL (10) to the fender mounting plate (30), and connecting the second connecting part (12) of the second end of the DRL (10) to the front bumper frame (50);
connecting both of the fourth connecting part (24) of the first end of the headlight (20) and the third connecting part (13) of the second portion of the first end of the DRL (10) to the first plate (41) of the fender mounting bracket (40) by a fastener.

10. A vehicle, comprising the vehicle light assembly of any one of claims 1-8.

## Patentansprüche

1. Eine Fahrzeugbeleuchtungsbaugruppe, bestehend aus einem DLR (10) und einem Scheinwerfer (20), worin ein erster Abschnitt eines ersten Endes des Tagfahrlichts (10) ist über ein erstes Verbindungsteil (11) mit einer Kotflügelmontageplatte verbindbar, ein zweites Ende des Tagfahrlichts (10) ist über ein zweites mit einem vorderen Stoßfängerrahmen (50) verbindbar Verbindungsteil (12); Und der Scheinwerfer (20) bei der Montage am Fahrzeug in einer Z-Richtung unterhalb des Tagfahrlichts (10) angeordnet ist, wobei sich eine X-Richtung auf die Längsrichtung des Fahrzeugs, eine Y-Richtung auf die Breitenrichtung des Fahrzeugs und die Z-Richtung bezieht "Richtung" bezieht sich auf die vertikale Richtung des Fahrzeugs und ist **dadurch gekennzeichnet, dass** ein zweiter Abschnitt des ersten Endes des DRL (10) über ein drittes Verbindungsteil (13) mit einer Kotflügelbefestigungshalterung (40) verbindbar ist, wobei das erste, zweite und dritte Verbindungsteile (11, 12, 13) Verbindungsteile des DRL (10) sind und ein erstes Ende des Scheinwerfers (20) über ein viertes Verbindungsteil (24) mit der Kotflügelmontagehalterung (40) verbindbar ist und a sechstes Verbindungsteil (26), und ein zweites Ende des Scheinwerfers (20) ist über ein fünftes Verbindungsteil (25) mit dem vorderen Stoßfängerrahmen (50) verbindbar, wobei das vierte, fünfte und sechste Verbindungsteil (24, 25, 26) sind Verbindungsteile des Scheinwerfers (20), wobei das dritte Verbindungsteil (13) und das vierte Verbindungsteil (24) an derselben Position durch dasselbe Befestigungselement mit der Kotflügelbefestigungshalterung (40) verbunden sind.

2. Leuchtenbaugruppe nach Anspruch 1, **dadurch gekennzeichnet, dass** Die ersten, dritten, vierten und sechsten Verbindungsteile sind so angeordnet, dass das DRL und der Scheinwerfer mit der Kotflügelmontageplatte (30) und der Kotflügelmontagehalterung (40) verbindbar sind, die sich auf einer Innenseite eines Kotflügels befinden in Y-Richtung und die Kotflügelbefestigungshalterung (40) befindet sich in Z-Richtung unterhalb des Kotflügels.

3. Leuchtenbaugruppe nach Anspruch 2, **dadurch gekennzeichnet, dass** die Kotflügelbefestigungshalterung (40) umfasst eine erste Platte (41), eine zweite Platte (42), die sich von einer Innenkante der ersten Platte (41) entlang der Y-Richtung zu einer Rückseite in der X-Richtung erstreckt, eine dritte Platte ( 43), die dadurch gebildet wird, dass sie sich von einer Unterkante der zweiten Platte (42) zu einer Außenseite entlang der Y-Richtung erstreckt, und eine vierte Platte (44), die sich von einem vorderen Ende der dritten Platte (43) nach unten erstreckt; das dritte Verbindungsteil (13) und das vierte Verbindungsteil (24) mit der ersten Platte (41) verbindbar sind und das sechste Verbindungsteil mit der vierten Platte (44) verbindbar ist.

4. Leuchtenbaugruppe nach Anspruch 3, **dadurch gekennzeichnet, dass** der vordere Stoßfängerrahmen (50) eine horizontal verlaufende erste Fläche (51) und eine senkrecht zur ersten Fläche (51) verlaufende zweite Fläche (52) umfasst, das zweite Verbindungsteil (12) mit der ersten Fläche (51) verbindbar ist, und das fünfte Verbindungsteil (25) mit der zweiten Oberfläche (52) verbindbar ist.

5. Leuchtenbaugruppe nach Anspruch 4, **dadurch gekennzeichnet, dass** der vierte Verbindungsteil (24) befindet sich auf einer Oberseite des ersten Endes des Scheinwerfers (20) und der sechste Verbindungsteil (26) befindet sich auf einer Unterseite des ersten Endes des Scheinwerfers (20).

6. Leuchtenbaugruppe nach Anspruch 5, **dadurch gekennzeichnet, dass** der erste Abschnitt und der zweite Abschnitt des ersten Endes des DRL (10) sich jeweils auf der Ober- und Unterseite des ersten Endes des DRL (10) in Z-Richtung befinden.

7. Leuchtenbaugruppe nach Anspruch 6, **dadurch gekennzeichnet, dass** der vierte Verbindungsteil (24) mit einer Vorhaltestruktur (27) darunter ausgebildet ist und ein der Vorhaltestruktur (27) entsprechendes Verbindungsloch in der ersten Platte (41) ausgebildet ist.

8. Leuchtenbaugruppe nach Anspruch 7, **dadurch gekennzeichnet, dass** das vierte Verbindungsteil (24), das fünfte Verbindungsteil (25), das sechste Verbindungsteil (26) und die Vorhaltestruktur (27) in X-Richtung verbunden sind.

9. Ein Installationsverfahren für eine Fahrzeugleuchtenbaugruppe nach einem der Ansprüche 1-8, umfassend: Verbinden des fünften Verbindungsteils (25) des zweiten Endes des Scheinwerfers (20) mit dem vorderen Stoßfängerrahmen (50) und Einsetzen der Vorhaltestruktur (27) in ein Verbindungsloch an einer ersten Platte (41) des Kotflügelmontagehalterung (40); Verbinden des ersten Verbindungsteils (11) des ersten Abschnitts des ersten Endes des Tagfahrlichts (10) mit der Kotflügelmontageplatte (30) und Verbinden des zweiten Verbindungsteils (12) des zweiten Endes des Tagfahrlichts (10) zum vorderen Stoßfängerrahmen (50); Verbinden sowohl des vierten Verbindungsteils (24) des ersten Endes des Scheinwerfers (20) als auch des dritten Verbindungsteils (13) des zweiten Abschnitts des ersten Endes des Tagfahrlichts (10) mit der ersten Platte (41). Befestigen Sie die Kotflügelhalterung (40) mit einem Befestigungselement.

10. Ein Fahrzeug, umfassend die Fahrzeugbeleuchtungsbaugruppe nach einem der Ansprüche 1-8.

## Revendications

1. Ensemble d'éclairage de véhicule, comprenant un DLR (10) et un phare (20), où une première partie d'une première extrémité du DRL (10) peut être connectée à une plaque de montage de garde-boue via une première partie de connexion (11) une seconde extrémité du DRL (10) peut être connectée à un cadre de pare-chocs avant (50) via une seconde pièce de connexion (12); et le phare (20) est situé au-dessous du DRL (10) dans une direction Z lorsqu'il est monté sur le véhicule, une direction X faisant référence à la direction de la longueur du véhicule, une direction Y faisant référence à la direction de la largeur du véhicule et la direction Z la direction fait référence à la direction verticale du véhicule et **caractérisé en ce qu'**une deuxième partie de la première extrémité du DRL (10) peut être reliée à un support de montage d'aile (40) par l'intermédiaire d'une troisième partie de connexion (13), la première, la deuxième et des troisièmes parties de connexion (11, 12, 13) sont des parties de connexion du DRL (10), et une première extrémité du phare (20) peut être connectée au support de montage d'aile (40) par l'intermédiaire d'une quatrième partie de connexion (24) et d'un la sixième partie de connexion (26), et une seconde extrémité du phare (20) peut être connectée au cadre de pare-chocs avant (50) par l'intermédiaire d'une cinquième partie de connexion (25), les quatrième, cinquième et sixième parties de connexion (24, 25, 26) sont des parties de connexion du phare (20), la troisième partie de connexion (13) et la quatrième partie de connexion (24) étant reliées au support de montage de garde-boue (40) dans une même position par une même fixation.

2. Ensemble lumineux selon la revendication 1, **caractérisé en ce que**, les première, troisième, quatrième et sixième parties de liaison sont agencées de telle sorte que le DRL et le phare peuvent être connectés à la plaque de montage d'aile (30) et au support de montage d'aile (40) qui sont situés sur un côté intérieur d'une aile dans une direction Y et le support de montage de garde-boue (40) est situé sous le garde-boue dans la direction Z.

3. Ensemble lumineux selon la revendication 2, **caractérisé en ce que**, le support de montage de garde-boue (40) comprend une première plaque (41), une deuxième plaque (42) s'étendant depuis un bord intérieur de la première plaque (41) le long de la direction Y jusqu'à un côté arrière dans la direction X, une troisième plaque ( 43) formée en s'étendant depuis un bord inférieur de la deuxième plaque (42) vers un côté extérieur le long de la direction Y, et une quatrième plaque (44) s'étendant vers le bas depuis une extrémité avant de la troisième plaque (43) ; la troisième partie de connexion (13) et la quatrième partie de connexion (24) peuvent être connectées à la première plaque (41) et la sixième partie de connexion peut être connectée à la quatrième plaque (44).

4. Ensemble lumineux selon la revendication 3, **caractérisé en ce que**, le cadre de pare-chocs avant (50) comprend une première surface (51) s'étendant horizontalement et une seconde surface (52) s'étendant perpendiculairement à la première surface (51), la seconde partie de liaison (12) peut être reliée à la première surface (51), et la cinquième partie de connexion (25) peut être connectée à la deuxième surface (52).

5. Ensemble lumineux selon la revendication 4, **caractérisé en ce que**, la quatrième partie de connexion (24) est située sur un côté supérieur de la première extrémité du phare (20), et la sixième partie de connexion (26) est située sur un côté inférieur de la première extrémité du phare (20).

6. Ensemble lumineux selon la revendication 5, **caractérisé en ce que**, la première partie et la seconde partie de la première extrémité du DRL (10) sont situées sur les côtés supérieur et inférieur de la première extrémité du DRL (10) dans la direction Z, respectivement.

7. Ensemble lumineux selon la revendication 6, **caractérisé en ce que**, la quatrième partie de connexion (24) est formée avec une structure de pré-maintien (27) en dessous, et un trou de connexion correspondant à la structure de pré-maintien (27) est formé sur la première plaque (41).

8. Ensemble lumineux selon la revendication 7, **caractérisé en ce que**, la quatrième partie de liaison (24), la cinquième partie de liaison (25), la sixième partie de liaison (26) et la structure de pré-maintien (27) sont reliées dans la direction X.

9. Procédé d'installation d'un ensemble d'éclairage de véhicule selon l'une quelconque des revendications 1 à 8, comprenant : connecter la cinquième partie de connexion (25) de la deuxième extrémité du phare (20) au cadre de pare-chocs avant (50), et insérer la structure de pré-maintien (27) dans un trou de connexion sur une première plaque (41) du support de montage de garde-boue (40) ; connecter la première partie de connexion (11) de la première partie de la première extrémité du DRL (10) à la plaque de montage de garde-boue (30), et connecter la deuxième partie de connexion (12) de la deuxième extrémité du DRL (10) au cadre de pare-chocs avant (50) ; reliant à la fois la quatrième partie de connexion (24) de la première extrémité du phare (20) et la troisième partie de connexion (13) de la deuxième partie de la première extrémité du DRL (10) à la première plaque (41) de le support de montage de garde-boue (40) par une attache.

10. Véhicule comprenant l'ensemble d'éclairage de véhicule selon l'une quelconque des revendications 1 à 8.
